# EUROPEAN PATENT APPLICATION

(11) **EP 4 368 272 A1**
(43) Date of publication of application: **15.05.2024**
(21) Application number: 22020544.7
(22) Date of filing: 10.11.2022
(51) Int. Cl.: B01D 19/00, C02F 1/20, C02F 1/46

(54) **DEVICE AND METHOD FOR DEGASSING WATER**

(71) Applicant: Linde GmbH, 82049 Pullach (DE)
(72) Inventor: Bauer, Ludwig, 82049 Pullach (DE); Flegiel, Felix, 82049 Pullach (DE); Otte, Daniel, 82049 Pullach (DE)
(74) Representative: Lu, Jing

(57) **Abstract**

A method of degassing water to purify the water from at least one undesired gas which is dissolved in the water comprises a first step of introducing a first feed water stream (1) in contact with a first stripping gas to separate the water from the at least one undesired gas dissolved in the water to yield a first water product stream, wherein the first stripping gas is at least one gas selected from N2, O2 and H2 which is essentially free from the at least one undesired gas.

## Description

The present invention relates to a method of degassing water to remove undesired gases which are dissolved in the water and a corresponding device which carries out this method.

### Background

Natural water is in equilibrium with the air and so will contain some dissolved gases such as nitrogen, oxygen and carbon dioxide and traces of inert gas as Argon. Precise levels will depend on temperature, pressure and location but, typically, it contains about 13 ppm nitrogen, 8 ppm oxygen, 3 to 7 ppm argon. Under some circumstances, these gases are required to be removed from the water as much as possible for various reasons. For instance, chemists remove gases from solvents when the components they are working on are possibly air- or oxygen-sensitive, or when bubble formation at solid-liquid interfaces becomes a problem. There are many ways to remove these dissolved gases from the water such as pressure reduction, thermal regulation, membrane degasification, ultrasonic degassing, chemical degassing, sparging by inert gas, steam stripping degasification and so forth.

The steam stripping is commonly used for cleaning up water streams which are contaminated with relatively low concentrations of volatile contaminants, such as hydrocarbon and other volatile organic components (VOCs). The technology relies on an understanding of Henry's law. According to henry's law, the concentration of each gas in a liquid is proportional to the partial pressure of that gas in contact with the liquid. By introducing a stripping gas that has little or no partial pressure of that gas to be removed and increases the area of the gas-liquid interface, which encourages some of the dissolved gases to diffuse into the stripping gas before it escapes from the liquid.

It is desirable to find a more cost-efficient way to remove the unwanted gases in the water as much as possible to fulfill the high purity requirement for certain industries.

### Disclosure of the invention

The present invention provides a method of degassing water according to claim 1 and a corresponding apparatus according to claim 10 which improves the degassing performance with a simple and economic configuration.

According to the present invention, the method of degassing water comprises a first step which introduces a first feed water stream into a column to get in contact with a first stripping gas, preferably in a counter-current configuration, to separate the water from undesired gas dissolved in the water to yield a first water product stream, wherein the first gas is at least one gas selected from N2, O2 and H2 which is essentially free from the at least one undesired gas. The first stripping gas goes through the water stream for a certain period to adsorb the unwanted gas from the water. It yields the water product stream with less unwanted gas for further processing. Preferably, the stripping gas is introduced into the column through tubes made of porous material to increase the contact areas with the water to be degassed and thus improve the degassing efficiency. Advantageously, less energy is consumed as the first stripping is easier to obtain with less energy. Furthermore, the water can be degassed with a lower temperature which has a broader selection of the material for the equipment, e.g., plastics requires temperature below 80°C.

Preferably, it comprises a second step which introduces a second feed water stream in contact with a second stripping gas, preferably also in a counter-current configuration, to yield a second water product stream. The second stripping gas is at least one gas selected from steam, N2, O2 and H2 which is different than the first stripping gas and essentially free from the unwanted gas. The first water product stream which is degassed by the first stage could form the second feed water stream which is treated by the first step. Alternatively, the second water product stream could also form the first feed water. This means that the second step can be implemented upstream or downstream of the first step. By this arrangement the water stream is degassed by at least two stages with two different gases. The water stream is first roughly degassed in the first stage to reduce the unwanted gas to a lower concentration and then further degassed in the second stage to further decrease the concentration of the unwanted gas, preferably lower than 10 ppb, to meet the requirement for the downstream process. This two-stage degassing process provides a more stable system which would continue to work even at malfunction of one stage. In addition, the process is more flexible due to the different possible combinations of stripping gases for these two stages. The stripping gases could be chosen depending on their availability from the downstream process or any supply system around. By having two stages in the degassing process, the amount of stripping gas required is reduced and so is the start-up time of the process. Second or first stripping vessel can also be used as a storage vessel for the electrolysis feed water so that fluctuations in electrolyzer operation (e.g., caused by high/low energy prices or fast changes in gas demand) can be balanced.

In the terminology used herein, the "first step" and the "second step" are defined by the stripping gas used which has nothing to do with the sequence of the steps. The first step could upstream or downstream of the second step. The "first stage" and the "second stage" are defined by its sequence. The first stage must be arranged upstream of the second stage.

In one embodiment, the undesired gas dissolved in the water is argon, and in order to remove argon, the water feed stream is first degassed by steam in the first stage (second step) then by N2, O2 or H2 in the second stage (first step), or the water feed stream is first degassed by N2 and subsequently by O2 or H2. In both examples, the sequency of degassing can be the other way around, means first degassed by O2, N2 or H2 and then by steam, or first degassed by O2 or H2 then by N2. The stripping gases are free of argon and preferably pure gases. Other gases can also be removed such as nitrogen, hydrogen, CO2, etc. which are dissolved in water

In one embodiment, the first or second water product stream whichever is downstream, is fed into a water electrolysis system for producing oxygen and hydrogen. The argon dissolved in the water is considered as the undesired gas. Argon is not able to be removed in the electrolysis system and thus passes directly into the end product of electrolyze which influences the purity of the produced oxygen and hydrogen. Preferably, part of O2 and H2 generated from the water electrolysis system are used as stripping gas for the degassing process upstream.

This ultra-high purity of O2 and H2 are often required in the electronic manufacturing industry, especially semiconductor fabs which grows rapidly in size at present. Hence, the demand of environmentally sustainable on-site electrolysis system for producing ultra-high purity of O2 and H2 is also expected to grow. To reach this high purity of gases, the argon contained in the O2 and H2 which originates from the feed water needs to be significantly reduced. Natural water contains usually 3 to 7 ppm argon which is in equilibrium with the air. This dissolved argon passes directly into the H2 and O2 produced by the electrolysis system. Conventionally, the argon is removed from the gases by a cryogenic distillation subsystem downstream of the electrolysis system or integration with large air separation units both of which make the process complicated and expensive. To improve the efficiency and cost-effectiveness it is suggested to remove argon directly in the feed water by the degassing process specified above, before being fed into the electrolysis system.

In a preferred embodiment, the undesired gas argon is degassed from the water stream by at least two stages in which one is treated by steam (defined as second step) and another one is treated by at least one gas selected from O2, H2 and N2 (defined as first step). An evaporator is arranged at the bottom of the column to generate steam rising upwards the column to strip the undesired gas from the water stream which is fed from the top of the column via some distribution arrangements as like nozzles. Preferably, a vacuum pump and a condenser is connected to the top of the column to reduce the temperature of the steam exiting the column. The column is heated by the steam which causes a reduction in the saturation of argon due to the increased temperature in the column. As a result, the partial pressure of argon exceeds the total pressure which causes a part of dissolved argon to be stripped out of the water. The argon dissolved in the water diffuses into the steam at the water-steam interface area. As a result, the water stream is heated by the steam and degassed from argon which is defined as the second product water stream. This warm second product water stream is used to warm up the water feed stream via a heat exchanger.

It is noted that this second step of degassing with steam could be the first stage or the second stage. Optionally, the first stage and the second stage are implemented in one single column which is divided into at least two parts to carry out the degassing steps respectively. In this case, the product water steam from the column could be used to warm up the water feed stream. After exchanging heat with the water feed stream, the product water stream is introduced to the next stage for further degassing or to the water electrolysis system for producing O2 and H2.

Preferably, before the first or second product water stream being introduced to the water electrolysis system the bubbles in the water stream are removed to further reduce the unwanted gas going into the water electrolysis and prevent the bubbles from flowing into the electrolyzer to cause underperformance and affect the service life of the system. In one embodiment, the bubble removal is achieved by introducing the product water stream into a container in which coalescence packing is arranged. It could be random packing or regular packing which collapse the even very small bubbles. This container is optionally integrated at the bottom of the column of the degassing unit.

In another embodiment, the second stripping gas is steam and the first stripping gas is one gas selected from N2, O2 and H2. The feed water if firstly treated by steam and consequently by the first stripping. A portion of the first product water stream is used to produce steam as the second stripping gas for the second step. The rest of the first product water stream is fed to the electrolyzer. It is advantageous to use the purified water directly from the first product water stream which is degassed by the previous two steps, so that no additional water preparation for generating steam which is essentially free from argon required.

The above described first step and second step are carried out in a first unit and a second unit respectably. In one embodiment, the first unit and the second unit are configured as one apparatus. The apparatus is built as one single column which is divided into an upper part and a lower part for implementing the two steps respectively. The feed water stream is fed from the upper section of the column. One stripping gas is introduced in the middle of the column and another stripping gas is introduced from the lower part of the column. The enriched stripping gas is discharged from top and middle section of the column respectively. Preferably, a debubble system is arranged at the bottom of the column and/or in a container separately downstream of the column. This system could comprise multiple coalescence packings which collapse the bubbles in the water when the water flows through the system before being fed to the electrolyzer.

In a preferred embodiment, the degassing unit is used as a storage container for storing the degassed water by accommodating a storage room at the bottom of the unit to keep a stable feed stream to the electrolyzer, so that no extra container is required for storage which makes the degassing apparatus more compact.

In another embodiment, the degassing process comprises multiple stages arranged successively each of which uses different stripping gases to remove the undesired gas from the water. The number of the stages depends on the requirement of the water purity. The more stage the degassing process comprises, the less unwanted gas is dissolved in the water. The stripping gases can be chosen from O2, N2, steam and H2 depending on which gas is easily available from the associated process. For instance, in a process of water electrolysis, O2 and H2 are easily available and thus preferred for the degassing process upstream. It is important to note that for a degassing process with multiple stages, the stripping gas used in the last stage should be essentially free of the undesired gas. For instance, in case of multiple stages the last stage uses steam as stripping gas, while the preceding stages use gases selected from H2, N2 or O2. It is noted that more stages are arranged, the more unwanted gas is removed from the water and the less stripping gas is used to achieve a high quality of feed water removed from the undesired gas.

### Description of the figures

Figure 1 shows an apparatus according to an embodiment of the present invention.
Figure 2 shows an apparatus according to a preferred embodiment of the present invention.
Figure 3 shows an apparatus according to another preferred embodiment of the present invention.
Figure 4 shows an apparatus according to another preferred embodiment of the present invention.
Figure 5 shows an apparatus according to another preferred embodiment of the present invention.
Figure 6 shows an apparatus according to another preferred embodiment of the present invention.

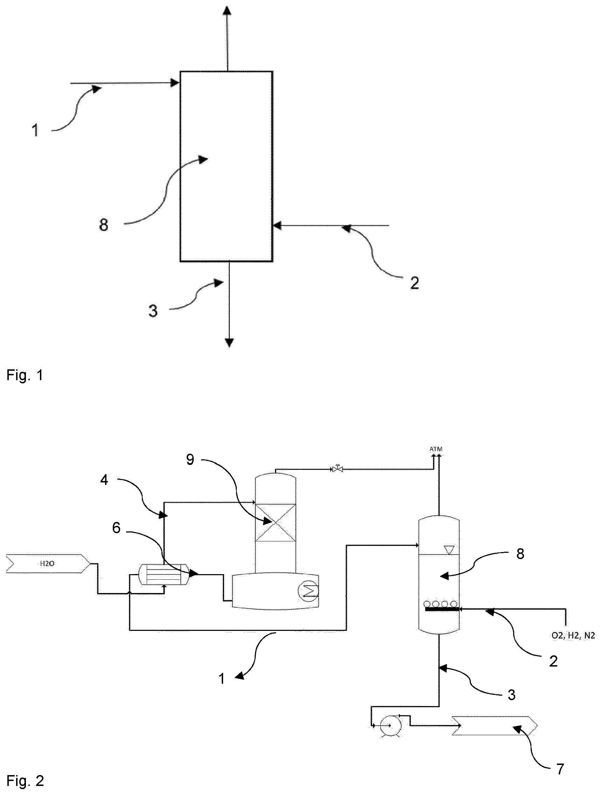

Fig. 1 shows the basic configuration of the present invention. A first feed water stream 1 is fed at the upper part of the first unit 8 of a degassing apparatus and the first stripping gas is introduced at the lower part of the first unit, preferably through tubes made of porous material, so that the stripping gas is finely aerated into the water with much greater contact area which improves the degassing efficiency significantly. The first feed water stream 1 could introduced into the first unit via distribution system to increase the contact area. The water is degassed for a water electrolysis system and argon is considered as the unwanted gas dissolved in the water which needs to be removed by the degassing process. The first stripping gas is one of H2, O2 or N2 which is essentially free of argon. As the electrolysis downstream produces H2 and O2 in which argon is significantly reduced due to the degassing process, it is advantageous to directly use a part of the produced O2 or H2 as stripping gas for degassing which saves an additional gas supply and preparation system and thus simplifies the process and reduces the overall costs. After the argon-free-stripping gas have contacted with the water sufficiently which cause argon to diffuse into the stripping gas, the first water product stream 3 which is removed from argon is fed to further processing as like electrolysis and the argon-enriched-stripping gas is discharged from the top of the unit to the atmosphere. Optionally, the stripping gas and the feed water stream can be introduced also in a concurrent way.

Fig. 2 shows a preferred embodiment in which a second unit 9 is arranged upstream of the first unit 8. The first unit 8 stays the same as described in the Fig. 1 with first feed water stream 1 and first stripping gas 2. The first water product stream 3 is fed to the water electrolysis system 7 for producing H2 and O2 and the enriched stripping gas is discharged to atmosphere. The second unit 9 is also built as a column at which bottom an evaporator is arranged for generating steam to degas the second feed water stream 4, wherein a part of the degassed water is thereby evaporated to generate the steam. The steam rises upwards along the unit 9 and get sufficient contact with the water flowing downwards. The argon-enriched steam is discharged at the top of the unit 9 to the atmosphere and the degassed water is partly reused by the evaporator and partly used to warm up the second water feed stream 4 in a heat exchanger 10 and then forms the first water feed stream 1 which is fed into the first unit 8 for further degassing.

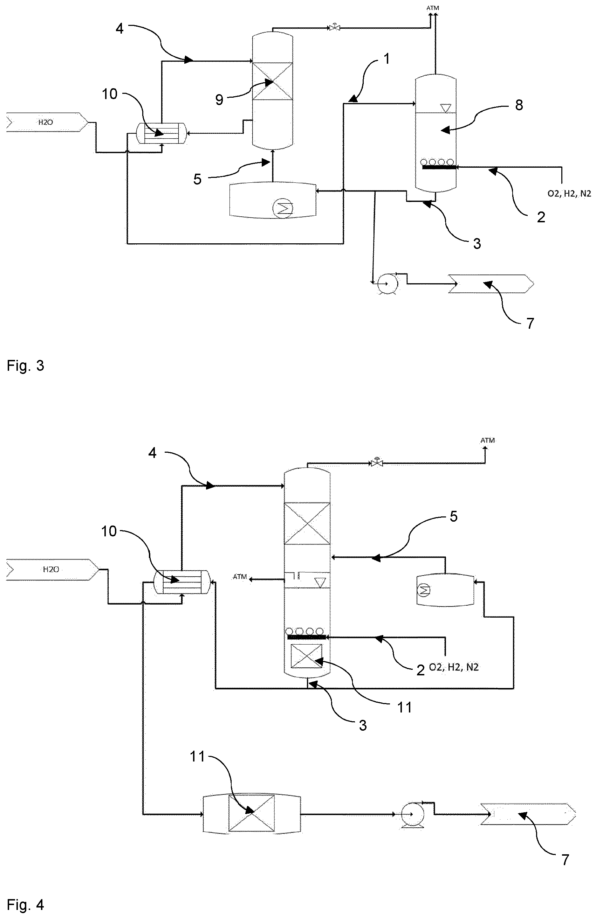

The embodiment illustrated in fig. 3 differentiates from the one in fig. 2 by the feature that the water used for generating steam is taken from the first unit 8 instead of from the second unit 9. A part of the first water product stream 3 is circulated back to the evaporator to generate steam 5 and the rest is fed to the water electrolysis system 7 to produce H2 and O2. Given the fact that the first water product stream 3 is degassed from argon, the resulting steam 5 with less argon used for the first stage of degassing results a higher efficiency in the second step. The less argon contained in the stripping gas, the more efficient will be the degassing process.

In Fig. 4 the first unit 8 and the second unit 9 are configured as one apparatus. The apparatus. The first unit 8 and the second unit 9 are configured as one apparatus. The apparatus is built as one single column which is divided into an upper part and a lower part for implementing the two steps respectively. In this embodiment, the second unit is the upper part for which the stripping gas is steam and the first unit is the lower part for which the stripping gas is O2, H2 or N2. It is also possible that the first unit and the second unit are arranged the other way around that the water is firstly degassed by O2, H2 or N2 and then by steam. The feed water stream 4 is fed from the upper section of the column and disperses downwardly in the column. The evaporator generates steam 5 which is introduced in the middle section of the column. The steam rises upward and degases the feed water from argon. A partition plate may be provided between the upper part and the lower part to allow the accumulated water in the upper part to flow into the lower part with a proper speed so that the water will be sufficiently degassed by steam in the upper part. The argon-enriched steam is discharged at the top of the column. The water degassed by steam goes through the partition plate to the lower part. The stripping gas 2 introduced from the bottom part of the column. The argon-enriched stripping gas is discharged from the middle of the column. Optionally, the water which is degassed by steam 5 and stripping gas 2 passes through a coalescence packing arranged at the bottom of the column to remove the bubbles in the water. The resulting product water stream 3 is further fed into a heat exchanger 10 to warm the water feed stream 4 with the heat gained from the steam and then passes a separate coalescence packing container 11 into the water electrolysis system 7 for producing O2 and H2.

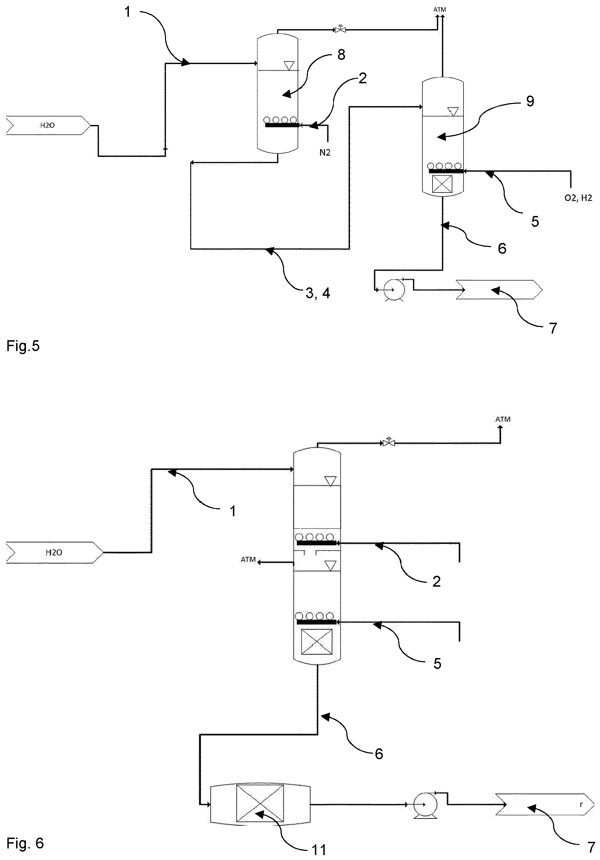

Fig. 5 shows a similar arrangement as in the fig. 3. The first water stream 1 is firstly degassed by the first stripping gas N2 and the resulting first water product stream 4 is further fed into the second unit 9 being degassing by the second stripping gas O2 or H2. The sequency of the stripping gas could also be the other way around that the water stream is firstly degassed by O2 or H2 and then by N2. After the two degassing steps the water is purified from argon and is further fed into the water electrolysis system 7.

Fig. 6 illustrates a similar configuration as in the fig. 4. Two different stripping gases 2 and 5 are introduced into the column. The stripping gas is selected from H2, O2 or N2. Preferably, the stripping gas 2 is N2 and the stripping gas 5 is O2 or H2.

## Claims

1. A method of degassing water to purify the water from at least one undesired gas which is dissolved in the water comprises a first step of introducing a first feed water stream (1) in contact with a first stripping gas (2) to separate the water from the at least one undesired gas dissolved in the water to yield a first water product stream (3), wherein the first stripping gas is at least one gas selected from O2, H2 or N2 which is essentially free from the at least one undesired gas.

2. A method according to claim 1, wherein it comprises a second step which introduces a second feed water stream (4) in contact with a second stripping gas (5) to separate the water from the at least one undesired gas dissolved in the water to yield a second water product stream (6), wherein the second stripping gas (5) is at least one gas selected from steam, N2, O2 and H2 which is essentially free from the at least one undesired gas, wherein the second stripping gas (5) is different than the first stripping gas (2), wherein the first water product stream (3) forms the second feed water (4), or the second water product stream (6) forms the first feed water (1).

3. A method according to claim 1 or 2, wherein the first or second product water stream (3, 6) is further fed into an electrolyze (7) for producing oxygen and hydrogen.

4. A method according to the claim 2, wherein the undesired gas is argon, wherein the second stripping gas (5) is at least one of H2 or O2 and the first stripping gas (2) is N2, or the second stripping gas (5) is steam and the first stripping gas (2) is at least one gas selected from N2, O2 and H2.

5. A method according to claim 4 that the second stripping gas (5) is steam and first stripping gas (2) is at least one gas selected from N2, O2 and H2, wherein the second feed water stream (4) exchanges heat with at least a portion of the first or second water product stream (3, 6).

6. A method according to claim 2, wherein the second fluid (7) is introduced in the second step through a sparger (6).

7. A method according to claim 3, wherein the first or second product water stream is debubbled before being fed into the electrolyzer (7).

8. A method according to claim 4, wherein the second stripping gas is steam and wherein the second water product stream (6) forms the first feed water (1), wherein a portion of the first product water stream (3) is used to produce steam as the second stripping gas (5) for the second step.

9. A method according to claim 3, wherein the stripping gases H2 and O2 are formed by the product of electrolyzer (7).

10. An apparatus of degassing water to purify the water from at least one undesired gas which is dissolved in the water comprises a first unit (8) in which a first feed water stream (1) is introduced in contact with a first stripping gas (2) to separate the water from the at least one undesired gas to yield a first product water stream (3), wherein the first stripping gas is at least one gas selected from O2, H2 and N2 which is essentially free from the at least one undesired gas.

11. An apparatus according to claim 10, wherein it further comprises a second unit (9) in which a second feed water steam (4) is introduced in contact with a second stripping gas (5) to further separate the water from the undesired gas to yield a second water product stream (6), wherein the second stripping gas (5) is at least one gas selected from steam, N2, O2 and H2 which is essentially free from the at least one undesired gas, wherein the second stripping gas (5) is different than the first stripping gas (2), wherein the second unit (9) is arranged upstream or downstream the first unit (8).

12. An apparatus according to claim 10 or 11, wherein an electrolyze (7) is positioned downstream the first or the second unit (8, 9) to electrolyze the water into oxygen and hydrogen.

13. An apparatus according to claim 11 or 12, wherein the first and second units (8, 9) are configured as one apparatus.

14. An apparatus according to one of the claims 10 to 13, wherein the stripping gas (2, 5) is introduced into the unit (8, 9) through porous material.

15. An apparatus according to one of claims 10 to 14, wherein one of the first or second unit is used as a storage container.
